# EUROPÄISCHE PATENTANMELDUNG

(11) **EP 4 203 223 A1**
(43) Veröffentlichungstag der Anmeldung: **28.06.2023**
(21) Anmeldenummer: 22212879.5
(22) Anmeldetag: 12.12.2022
(51) Int. Cl.: H02J 3/06, H02J 13/00, H02J 3/08, H02J 3/38, H02J 3/32, H02J 9/06, H02J 9/08

(54) **ANLAGE UND VERFAHREN ZUR STROMVERSORGUNG EINES UNTERGEORDNETEN NETZGEBIETES**

(30) Priorität: 20.12.2021 CH 0707502021
(71) Anmelder: BKW Energie AG, 3013 Bern (CH); Jost AG, Maschinenfabrik, 3550 Langnau im Emmental (CH)
(72) Erfinder: BACHMANN, Adrian, 3453 Heimisbach (CH); BAY, Patrick, 3110 Münsingen (CH)
(74) Vertreter: Keller Schneider Patent- und Markenanwälte AG

(57) **Zusammenfassung**

Eine Anlage zur Stromversorgung eines untergeordneten Netzgebietes (2) umfasst eine erste Verbindung zu einem übergeordneten Netzgebiet (1), wobei die erste Verbindung mittels eines Trennschalters (5) selektiv herstellbar und trennbar ist, eine zweite Verbindung zum untergeordneten Netzgebiet (2), eine Hochvolt-Speicherbatterie (40) mit einer Ladeelektronik, eine erste Aufbereitungseinrichtung (50) mit einem Umrichter (51), zur Aufbereitung von elektrischer Energie von der Hochvolt-Speicherbatterie (40), einen Hochvolt-Verteiler (30), der mit der Hochvolt-Speicherbatterie (40) und der ersten Aufbereitungseinrichtung (50) zum Austausch elektrischer Energie leitungsmässig verbunden ist, eine Synchronisationssteuerung (80), die mit einer Messsonde (81) im übergeordneten Netzgebiet (1) zum Empfang von Messsignalen gekoppelt ist, und eine Steuerung (70) zum Steuern zumindest des Trennschalters (5), des Hochvolt-Verteilers (30) und der ersten Aufbereitungseinrichtung (50). Die erste Aufbereitungseinrichtung (50) ist anhand der von der Messsonde (81) empfangenen Messsignalen derart steuerbar, dass ohne Versorgungsunterbruch im untergeordneten Netzgebiet (2) und bei aktivem übergeordneten Netzgebiet (1) von einem Inselbetrieb, in dem die erste Verbindung mittels des Trennschalters (5) getrennt ist, in einen integrierten Betrieb umschaltbar ist, in dem die erste Verbindung hergestellt ist, wobei bei der Umschaltung eine Spannung, eine Frequenz und drei Phasen im untergeordneten Netzgebiet (2) von der ersten Aufbereitungseinrichtung (50) an das übergeordnete Netzgebiet (1) angepasst werden.

## Beschreibung

### Technisches Gebiet

Die Erfindung betrifft eine Anlage zur Stromversorgung eines untergeordneten Netzgebietes (Netzersatzanlage) und ein entsprechendes Verfahren.

### Stand der Technik

Im Rahmen von Stromversorgungsnetzen werden Netzersatzanlagen (NEA) zur temporären Versorgung von Netzgebieten eingesetzt, sowohl bei geplanten Unterhalts- oder Bauarbeiten als auch bei Notfällen, z. B. Ausfällen nach Unwettern. Sie umfassen eine Energiequelle, oft ein so genanntes Genset mit einem Verbrennungsmotor und einem damit betriebenen Stromgenerator. Ein Einsatz einer solchen Netzersatzanlage kann einige Stunden dauern, in gewissen Fällen aber auch mehrere Tage bis sogar Wochen.

Netzersatzanlagen sind oft mobil, so dass sie je nach Bedarf zum jeweiligen Einsatzort transportiert werden können.

Die Last in typischen Netzgebieten schwankt relativ stark, gerade auch aufgrund von kurzzeitigen Anschaltströmen. Da eine Netzersatzanlage diese schwankende Last bewältigen muss, mussten die Gensets herkömmlicher Anlagen auf die maximal erwartete Last ausgerichtet und entsprechend gross dimensioniert werden. Im üblichen Betrieb wurde aber in vielen Fällen nur eine vergleichsweise geringe Leistung benötigt - was letztlich zu einem ineffizienten Betrieb führte. Mit dem Betrieb der Netzersatzanlage, insbesondere des Gensets, gingen zudem stets erhebliche Lärmemissionen einher.

In den letzten Jahren wurden viele Netzgebiete mit lokalen Erzeugern, z. B. Photovoltaikanlagen (PV-Anlagen), kleinen Windkraftanlagen, Biogas- oder Biomassekraftwerken oder I<leinwasserkraftwerken ausgerüstet. Im Netzersatzbetrieb mussten diese Erzeuger bisher deaktiviert werden, weil herkömmliche NEA eine temporäre Überproduktion im versorgten Netzgebiet nicht bewältigen konnten. Dies bedeutet, dass auch eine lokale Produktion nicht zur Reduktion von Lastspitzen beitragen konnte.

### Darstellung der Erfindung

Aufgabe der Erfindung ist es, eine dem eingangs genannten technischen Gebiet zugehörende Anlage zur Stromversorgung eines untergeordneten Netzgebietes zu schaffen, welche einen effizienten und leisen Betrieb ermöglicht.

Die Lösung der Aufgabe ist durch die Merkmale des Anspruchs 1 definiert. Gemäss der Erfindung umfasst die Anlage zur Stromversorgung eines untergeordneten Netzgebietes
a) eine erste Verbindung zu einem übergeordneten Netzgebiet, wobei die erste Verbindung mittels eines Trennschalters selektiv herstellbar und trennbar ist;
b) eine zweite Verbindung zum untergeordneten Netzgebiet;
c) eine Hochvolt-Speicherbatterie mit einer Ladeelektronik;
d) eine erste Aufbereitungseinrichtung mit einem Umrichter, zur Aufbereitung von elektrischer Energie von der Hochvolt-Speicherbatterie;
e) einen Hochvolt-Verteiler, der mit der Hochvolt-Speicherbatterie und der ersten Aufbereitungseinrichtung zum Austausch elektrischer Energie leitungsmässig verbunden ist;
f) eine Synchronisationssteuerung, die mit einer Messsonde im übergeordneten Netzgebiet zum Empfang von Messsignalen gekoppelt ist; und
g) eine Steuerung zum Steuern zumindest des Trennschalters, des Hochvolt-Verteilers und der ersten Aufbereitungseinrichtung;

Dabei ist die erste Aufbereitungseinrichtung anhand der von der Messsonde empfangenen Messsignalen derart steuerbar, dass ohne Versorgungsunterbruch im untergeordneten Netzgebiet und bei aktivem übergeordneten Netzgebiet von einem Inselbetrieb, in dem die erste Verbindung mittels des Trennschalters getrennt ist, in einen integrierten Betrieb umschaltbar ist, in dem die erste Verbindung hergestellt ist, wobei bei der Umschaltung eine Spannung, eine Frequenz und drei Phasen im untergeordneten Netzgebiet von der ersten Aufbereitungseinrichtung an das übergeordnete Netzgebiet angepasst werden (Rücksynchronisation).

Die Hochvolt-Speicherbatterie (bzw. eine Gruppe mehrerer Hochvolt-Speicherbatterien) stellt eine I<apazität von mindestens 20 kWh, insbesondere mindestens 50 kWh, zur Verfügung. Sie weist insbesondere eine Spannung von 380 V oder mehr, insbesondere 750 V oder mehr, auf. Sie kann auf Li-lonen-Zellen oder einer anderen geeigneten Zellchemie basieren.

Nebst dem Umrichter kann die erste Aufbereitungseinrichtung insbesondere einen Transformator umfassen, um die Batteriespannung in Netzspannung zu transformieren.

Der Hochvolt-Verteiler ist in der Lage, Verbindungen zwischen der Hochvolt-Speicherbatterie und der ersten Aufbereitungseinrichtung anhand von Steuersignalen der Steuerung selektiv zu schaffen und zu trennen. Der Energiefluss zwischen der Hochvolt-Speicherbatterie und dem Hochvolt-Verteiler sowie zwischen dem Hochvolt-Verteiler und der ersten Aufbereitungseinrichtung kann dabei in beiden Richtungen erfolgen (bidirektional).

Im Inselbetrieb wird die Stromversorgung im untergeordneten Netzgebiet von der erfindungsgemässen Anlage sichergestellt.

Die Umschaltung vom Inselbetrieb zum integrierten Betrieb kann über einen ausgeschalteten Zustand der erfindungsgemässen Anlage erfolgen, denn für den ordnungsgemässen Betrieb im untergeordneten Netzgebiet ist die Anlage nach dem Wiederverbinden mit dem übergeordneten Netzgebiet nicht notwendig. Der ausgeschaltete Zustand kann aber nur für eine sehr kurze Zeit herrschen, so dass faktisch eine Umschaltung vom Inselbetrieb zum integrierten Betrieb stattfindet.

Im Gegensatz zu herkömmlichen Netzersatzanlagen ermöglicht die erfindungsgemässe hybride Anlage eine Nutzung von Energie, die durch die Erzeuger im untergeordneten Netzgebiet bereitgestellt wird. Die Hochvolt-Speicherbatterie kann eine die momentane Nachfrage übersteigende Produktion in diesem Netzgebiet bei Bedarf aufnehmen. Entsprechend ergibt sich eine Reduktion der benötigten Kapazität der Energiespeicher der Anlage.

Die Hochvolt-Speicherbatterie und die erste Aufbereitungseinrichtung erleichtern die Rücksynchronisation und das Handling von schnellen Lastwechseln, indem sie eine schnellere und einfachere Beeinflussung der Stromparameter ermöglichen als beispielsweise ein Genset mit variabler Motordrehzahl.

Mit Vorteil ist im integrierten Betrieb die Hochvolt-Speicherbatterie selektiv mit Energie vom übergeordneten Netzgebiet und mit Energie vom untergeordneten Netzgebiet aufladbar.

Übersteigt die im untergeordneten Netzgebiet erzeugte Energie den momentanen Bedarf, so kann der Überschuss zum Laden der Hochvolt-Speicherbatterie eingesetzt werden. Eine Speicherbatterie hoher Kapazität ist insofern von Vorteil, als sie auch hohe Ladeleistungen erlaubt und somit die erfindungsgemässe Anlage kurzzeitige Stromspitzen gut auffangen kann. Die in der Hochvolt-Speicherbatterie gespeicherte Energie steht dann für nachfolgende Zeitfenster mit einem Bedarfsüberschuss im untergeordneten Netz zur Verfügung.

Mit Vorteil ist im Inselbetrieb und im integrierten Betrieb von der Hochvolt-Speicherbatterie bedarfsweise Energie zur Stützung des untergeordneten Netzgebiets abgebbar.

Im Inselbetrieb wird der Energiebedarf im untergeordneten Netz bei einem Bedarfsüberschuss von der Hochvolt-Speicherbatterie gedeckt. Im integrierten Betrieb trägt die erfindungsgemässe Einrichtung zur einer Stabilisierung des Gesamtnetzes bei. Eine Abgabe von Energie der Hochvolt-Speicherbatterie in das übergeordnete Netzgebiet ist zudem dann sinnvoll, wenn der Ladezustand der Speicherbatterie gezielt erniedrigt werden soll, z. B. in Erwartung eines Produktionsüberschusses im untergeordneten Netzgebiet nach Übergang zum Inselbetrieb. Diese Situation kann beispielsweise dann auftreten, wenn die Umschaltung zu einer Tageszeit mit hoher PV-Produktionsleistung erfolgt und der erwartete Energiebedarf in einem Zeitraum nach der Umschaltung niedriger ist als die erwartete Produktionsleistung.

Mit Vorteil kann im integrierten Betrieb von der Hochvolt-Speicherbatterie Energie an das untergeordnete und/oder übergeordnete Netzgebiet abgegeben werden, um einen Ladestand der Hochvolt-Speicherbatterie abzusenken. Eine Absenkung des Ladestands ist insbesondere dann sinnvoll, wenn im Inselbetrieb Produktionsüberschüsse im untergeordneten Netz erwartet werden. So kann sichergestellt werden, dass diese Überschüsse sowohl in Bezug auf die Leistung als auch in Bezug auf die Energie aufgenommen werden können.

Bevorzugt sind zum Umschalten von einem ausgeschalteten Betriebszustand oder vom integrierten Betrieb zum Inselbetrieb eine Spannung, eine Frequenz und drei Phasen der Anlage an das übergeordnete Netzgebiet anpassbar, wonach die Verbindung zum übergeordneten Netzgebiet mittels des Trennschalters trennbar ist.

Dies ermöglicht einen unterbrechungslosen Übergang zum Inselbetrieb, ohne Störung der Verbraucher und Erzeuger im untergeordneten Netzgebiet.

Bei bevorzugten Ausführungsformen umfasst die erfindungsgemässe Anlage eine erste Steuereinrichtung zum Steuern von Erzeugern im untergeordneten Netzgebiet, umfassend eine erste Eingangsschnittstelle zum Empfang von ersten Eingangsdaten zur Energieverfügbarkeit, eine erste Ausgangsschnittstelle zur Übermittlung von ersten Steuerdaten an die Erzeuger und erste Verarbeitungsmittel zur Verarbeitung der ersten Eingangsdaten und zum Generieren der ersten Steuerdaten.

Im einfachsten Fall werden die Erzeuger - wie an sich bekannt - durch eine Erhöhung der Netzfrequenz deaktiviert. Wechselrichter von Photovoltaik-Anlagen müssen beispielsweise derart ausgebildet sein, dass sie sich beim Überschreiten einer bestimmten Grenzfrequenz automatisch ausschalten. Bevorzugt ermöglichen die erste Ausgangsschnittstelle und die ersten Steuerdaten aber eine selektive Deaktivierung einzelner oder aller Erzeuger im untergeordneten Netzgebiet, ohne dass dazu die Netzfrequenz beeinflusst werden muss.

Bei bevorzugten Ausführungsformen umfasst die erfindungsgemässe Anlage eine zweite Steuereinrichtung zum Steuern von Verbrauchern im untergeordneten Netzgebiet, umfassend eine zweite Eingangsschnittstelle zum Empfang von zweiten Eingangsdaten zur Energieverfügbarkeit, eine zweite Ausgangsschnittstelle zur Übermittlung von Steuerdaten an die Verbraucher und zweite Verarbeitungsmittel zur Verarbeitung der zweiten Eingangsdaten und zum Generieren der zweiten Steuerdaten.

Im einfachsten Fall werden die Verbraucher durch eine Senkung der Netzfrequenz deaktiviert. Bevorzugt ermöglichen die zweite Ausgangsschnittstelle und die zweiten Steuerdaten aber eine selektive Deaktivierung einzelner oder aller Verbraucher im untergeordneten Netzgebiet, ohne dass dazu die Netzfrequenz beeinflusst werden muss.

Die zweite Steuereinrichtung kann identisch sein mit der ersten Steuereinrichtung, es kann sich aber auch um unabhängige Komponenten handeln. Für das Generieren der ersten Steuerdaten und der zweiten Steuerdaten können dieselben Eingangsdaten herangezogen werden, d. h. die ersten Eingangsdaten und die zweiten Eingangsdaten sind identisch, oder es werden verschiedene Eingangsdaten genutzt.

Bevorzugt ist die erste und/oder zweite Ausgangsschnittstelle dazu eingerichtet, Power-Line-Communication-Signale in das untergeordnete Netzgebiet einzukoppeln.

Die Erzeuger und/oder Verbraucher können beispielsweise mittels Power-Line-Communication-Signalen (PLC-Signalen) gezielt angesteuert werden. Eine gezielte Ansteuerung ist auch über andere I<anäle, z. B. über Mobilfunk und entsprechende Schnittstellen möglich.

Eine Steuerung der Verbraucher ist auch über gängige Rundsteuersignale möglich. Zu diesem Zweck kann die zweite Ausgangsschnittstelle dazu eingerichtet sein, von den zweiten Verarbeitungsmitteln erzeugte Rundsteuersignale ins untergeordnete Netz einzukoppeln. Um möglichst viele Verbraucher steuern zu können, können bevorzugt sowohl Rundsteuersignale als auch PLC- und/oder Mobilfunksignale erzeugt und übermittelt werden. Sowohl bei PLC- als auch bei Rundsteuersignalen sind diese im Inselbetrieb im untergeordneten Netzgebiet von den entsprechenden Signalen im übergeordneten Netzgebiet entkoppelt. Im integrierten Betrieb können die Signale aus dem übergeordneten Netzgebiet unverändert in das untergeordnete Netzgebiet weitergegeben werden. Es kann aber auch vorteilhaft sein, bereits vor dem Schalten in den Inselbetrieb eine Entkoppelung der Signale vorzunehmen und die Umschaltung durch eine entsprechende Steuerung der Erzeuger und/oder Verbraucher im untergeordneten Gebiet vorzubereiten.

Die erste und/oder zweite Eingangsschnittstelle kann dazu eingerichtet sein, PLC-Signale aus dem übergeordneten Netzgebiet zu empfangen. Diese Daten können einerseits - wie erwähnt - im integrierten Betrieb (und gegebenenfalls auch im Inselbetrieb) - an das untergeordnete Netzgebiet weitergegeben werden. Sie können aber auch dazu genutzt werden, um Vorhersagen zum Verbrauch und/oder zur Produktion im untergeordneten Netzgebiet zu treffen.

Mit Vorteil ist die erste und/oder zweite Eingangsschnittstelle dazu eingerichtet, Echtzeit-Erzeugungs- und/oder Verbrauchsdaten zu empfangen.

Diese Daten können sich auf das untergeordnete Netzgebiet und/oder das übergeordnete Netzgebiet beziehen. Im zweiten Fall sind sie dann nützlich, wenn sie einen Rückschluss auf die aktuellen Verhältnisse im untergeordneten Netzgebiet erlauben. Aus den Echtzeit-Erzeugungs- und/oder Verbrauchsdaten lassen sich gegebenenfalls I<urzfrist-Prognosen für die Stromproduktion oder den Energiebedarf im untergeordneten Netzgebiet gewinnen, die wiederum für die Steuerung der erfindungsgemässen Anlage und/oder der Verbraucher im untergeordneten Netzgebiet herangezogen werden können.

Bei einer bevorzugten Ausführungsform umfasst die erfindungsgemässe Anlage folgende Module:
a) ein Versorgungsmodul mit einem I<raftstofftank und der Hochvolt-Speicherbatterie;
b) ein Steuermodul mit der Steuerung und einer Benutzerschnittstelle für die Steuerung; und
c) ein erstes Energieaufbereitungsmodul mit der ersten Aufbereitungseinrichtung.

Die modulare Bauweise ermöglicht einen einfachen Austausch einzelner Module. Zudem kann die Anlage auf einfache Weise den Erfordernissen eines konkreten Einsatzes angepasst werden, z. B. indem das aktuelle Versorgungsmodul durch ein anderes mit höherer bzw. tieferer Kapazität ausgetauscht wird. Es ist auch möglich, die Anzahl der eingesetzten Module fallweise anzupassen, z. B. indem zwei oder mehr Versorgungsmodule bereitgestellt werden, wenn dies der Einsatz erfordert. Die einzelnen Module können beispielsweise als auswechselbare Einheiten ausgebildet sein, die in ein Rack einbaubar sind und über Energie- und Datenschnittstellen verfügen, die denjenigen des Racks angepasst sind.

Die erfindungsgemässe Anlage ist insbesondere auf einem Fahrzeug angeordnet. Beim Fahrzeug kann es sich um eines mit integriertem Antrieb, z. B. einen Lastwagen, handeln oder um einen Anhänger, der sich an ein Zugfahrzeug ankoppeln lässt. Die Anlage kann in das Fahrzeug eingebaut, an dieses angebaut und/oder auf diesem aufgebaut sein. Sie kann auch auf mehrere Fahrzeuge verteilt werden, die für den Betrieb zumindest energie- und datenmässig miteinander gekoppelt werden. Die Anordnung auf einem Fahrzeug (bzw. auf mehreren Fahrzeugen) ermöglicht einen flexiblen und schnellen Einsatz.

Alternativ kann die Anlage beispielsweise als aufnehmbare und absetzbare Einheit ausgebildet sein, die mittels eines Krans erfasst, auf ein Fahrzeug geladen und am Einsatzort wieder abgeladen werden kann. Grundsätzlich kann die erfindungsgemässe Anlage auch stationär eingesetzt werden.

Mit der erfindungsgemässen Anlage lässt sich ein Verfahren zur Stromversorgung eines untergeordneten Netzgebietes ausführen, das folgende Schritte umfasst:
a) Positionieren einer mobilen Netzersatzanlage an einem Einsatzort;
b) Verbinden der Netzersatzanlage mit einem übergeordneten Netzgebiet;
c) Verbinden der Netzersatzanlage mit dem untergeordneten Netzgebiet;
d) Bereitstellen einer Hochvolt-Speicherbatterie der Netzersatzanlage mit einem vorgebbaren Ladestand;
e) gegebenenfalls Trennen einer Verbindung zwischen dem untergeordneten Netzgebiet und dem übergeordneten Netzgebiet;
f) Versorgen des untergeordneten Netzgebiets im Inselbetrieb mit geeignet aufbereiteter Energie der Hochvolt-Speicherbatterie;
g) Empfang von Messsignalen einer Messsonde im übergeordneten Netzgebiet;
h) Anpassen einer Spannung, einer Frequenz und von drei Phasen im untergeordneten Netzgebiet an das übergeordnete Netzgebiet, anhand der empfangenen Messsignale; und
i) Wiederherstellung einer Verbindung zwischen dem übergeordneten Netzgebiet und dem untergeordneten Netzgebiet, nachdem die Anpassung erfolgt ist.

Je nach Einsatzfall kann das Verbinden der Netzersatzanlage mit dem übergeordneten Netzgebiet beim Einrichten der Netzersatzanlage erfolgen, während das untergeordnete Netzgebiet noch vom übergeordneten Netzgebiet versorgt wird. So wird ein reibungsloser Übergang zum Inselbetrieb beim Trennen vom übergeordneten Netzgebiet ermöglicht. In ausserordentlichen Fällen, z. B. bei einem Störungsfall, der zum Unterbruch der Versorgung zwischen dem übergeordneten Netzgebiet und dem untergeordneten Netzgebiet geführt hat, ist die Verbindung zum übergeordneten Netzgebiet schon getrennt. In diesen Fällen erfolgt eine Versorgung des untergeordneten Netzgebiets erst durch die Inbetriebnahme der Netzersatzanlage (Blackstart). In diesem Fall kann mit der Verbindung zum übergeordneten Netzgebiet zugewartet werden. Sie ist erst in Vorbereitung des Übergangs zum ordentlichen Betrieb notwendig und erfolgt beispielsweise nach der Instandstellung der Verbindung zwischen dem untergeordneten und dem übergeordneten Netzgebiet.

Je nach Ausgangs-Ladezustand wird der vorgebbare Ladezustand der Hochvolt-Speicherbatterie durch gezieltes Laden oder Entladen der Speicherbatterie erreicht. Das Laden kann mit Energie aus dem übergeordneten Netzwerk oder dem untergeordneten Netzwerk erfolgen (je nach Verfügbarkeit). Das Entladen kann ins übergeordnete Netzgebiet erfolgen (sofern dieses mit der Anlage verbunden ist) oder ins untergeordnete Netzgebiet. Die Vorbereitung der Hochvolt-Speicherbatterie kann bereit vor dem Transport der Anlage zum Einsatzort erfolgen, z. B. in einem Depot.

Bei einer ersten Gruppe von Ausführungsformen kann die Anlage aufgrund der Hochvolt-Speicherbatterie ohne eine lokale brennstoffbetriebene Einrichtung zur Erzeugung elektrischer Energie (z. B. einem Genset) betrieben werden. Ob dies möglich ist, hängt zum einen von der I<apazität der Hochvolt-Speicherbatterie ab, zum anderen von der Grösse des untergeordneten Netzgebiets, der Stromproduktion im untergeordneten Netzgebiet und der Einsatzdauer und Einsatzzeit. So kann die Hochvolt-Speicherbatterie bei einem Einsatz tagsüber, bei prognostizierter hoher Sonneneinestrahlung und ausreichender PV-Produktion im untergeordneten Netzgebiet den Regelungsbedarf abdecken. Anlagen ohne brennstoffbetriebene Einrichtung, insbesondere ohne Genset, sind kompakter, erfordern weniger Wartung und ermöglichen einen leisen oder gar praktisch geräuschlosen Betrieb.

In gewissen Fällen, beispielsweise bei einem länger andauernden Einsatz, auch in den Nachtstunden, muss zusätzliche Energie lokal bereitgestellt werden. In solchen Fällen umfasst die erfindungsgemässe Anlage gemäss einer zweiten Gruppe von Ausführungsformen bevorzugt weiter
h) eine brennstoffbetriebene Einrichtung zur Erzeugung elektrischer Energie und einen lokalen Brennstoffspeicher für die brennstoffbetriebene Einrichtung; und
i) eine zweite Aufbereitungseinrichtung zur Aufbereitung der elektrischen Energie der brennstoffbetriebenen Einrichtung.

Dabei ist die erste Aufbereitungseinrichtung auch zur Aufbereitung von elektrischer Energie von der zweiten Aufbereitungseinrichtung ausgebildet, der Hochvolt-Verteiler ist auch mit der zweiten Aufbereitungseinrichtung leitungsmässig verbunden, und die Steuerung ist weiter zum Steuern der brennstoffbetriebenen Einrichtung zur Erzeugung elektrischer Energie ausgebildet.

Zwischen der zweiten Aufbereitungseinrichtung und dem Hochvolt-Verteiler ist der Stromfluss unidirektional von der Aufbereitungseinrichtung zum Verteiler.

Auch wenn eine brennstoffbetriebene Einrichtung für einen Einsatz benötigt wird, ermöglicht die erfindungsgemässe Anlage eine Reduktion der Betriebsstunden der brennstoffbetriebenen Einrichtung, damit auch der Lärmexpositionsdauer, nicht nur aufgrund der Nutzung der im untergeordneten Netz erzeugten Energie, sondern zumindest bei kürzeren Einsätzen auch weil die Hochvolt-Speicherbatterie vor der Umschaltung in den Inselbetrieb vorgeladen werden kann. Ebenso wird eine gezielte Steuerung des Betriebs der brennstoffbetriebenen Einrichtung ermöglicht, um z. B. zu vermeiden, dass ein Dieselmotor in den Nachtstunden laufen muss, wodurch sich Lärmemissionen in kritischen Zeitfenstern vermeiden lassen. Dies ist insbesondere dann von grossem Vorteil, wenn die erfindungsgemässe Anlage in der Umgebung von Wohnbauten platziert werden muss.

Bei der erfindungsgemässen Anlage sind zudem sowohl die Versorgung des untergeordneten Netzgebiets als auch eine Rücksynchronisation zum übergeordneten Netzgebiet auch dann möglich, wenn die brennstoffbetriebene Einrichtung zur Erzeugung elektrischer Energie (temporär) ausfällt, z. B. wegen Brennstoffmangel oder wegen eines technischen Problems im Antriebsbereich. Wenn innerhalb des Zeitraums, in dem das untergeordnete Netzgebiet mit Energie aus der Hochvolt-Speicherbatterie versorgt werden kann, keine Rücksynchronisation möglich ist, kann die brennstoffbetriebene Einrichtung repariert oder ausgetauscht bzw. neuer Brennstoff bereitgestellt werden.

Die Anlage kann modular ausgebildet sein, so dass die brennstoffbetriebene Einrichtung (und gegebenenfalls die zweite Aufbereitungseinrichtung) nach Bedarf für einen Einsatz beigestellt oder weggelassen werden können. Die Anlage umfasst entsprechend bevorzugt ein zweites Energieaufbereitungsmodul mit der brennstoffbetriebenen Einrichtung zur Erzeugung elektrischer Energie und der zweiten Aufbereitungseinrichtung. Der I<raftstofftank kann Teil dieses Moduls oder des Versorgungsmoduls sein.

Bei der brennstoffbetriebenen Einrichtung zur Erzeugung elektrischer Energie handelt es sich insbesondere um ein so genanntes Genset, d. h. eine Kombination eines Verbrennungsmotors, z. B. eines Dieselmotors, mit einem Generator. Sie kann aber auch beispielsweise auf einer Brennstoffzelle basieren, die aus einem geeigneten Brennstoff wie Wasserstoff, Methanol, Butan oder Erdgas elektrischen Strom erzeugt.

Bei der brennstoffbetriebenen Einrichtung zur Erzeugung elektrischer Energie kann es sich um ein Genset handeln, dessen Antriebsmotor mit einer konstanten Drehzahl betrieben wird.

Dies ermöglicht einen effizienten und verschleissarmen Betrieb des Antriebsmotors des Gensets. Auch die Lärmemissionen können auf diese Weise reduziert werden, insbesondere weil eine Schalldämmung perfekt an die Lärmerzeugung bei der konstanten (und bekannten) Drehzahl angepasst werden kann. Lastwechsel erfordern keine Anpassung der Drehzahl, sondern werden von der Hochvolt-Speicherbatterie und den nachgeschalteten I<omponenten aufgefangen.

In alternativen Ausführungsformen der Anlage kann ein Genset vorgesehen sein, das bei unterschiedlichen, den Betriebsverhältnissen angepassten Drehzahlen betrieben wird, wobei aber eine Drehzahlanpassung bevorzugt nicht dynamisch aufgrund der aktuellen Last erfolgt, sondern stufenweise, um je nach Ladezustand und Energiebedarf die abgegebene Leistung zu beeinflussen.

Die zweite Aufbereitungseinrichtung umfasst beispielsweise einen Gleichrichter, wenn die brennstoffbetriebene Einrichtung Wechselstrom erzeugt, wie es z. B. bei einem Genset der Fall ist. Sie kann zudem einen Transformator umfassen, wenn die Spannung im Hinblick auf das die weitere Verwendung der Energie, z. B. das Aufladen der Hochvolt-Speicherbatterie, anzupassen ist.

Im integrierten Betrieb einer Anlage mit brennstoffbetriebener Einrichtung kann die Hochvolt-Speicherbatterie bevorzugt auch selektiv mit Energie von der brennstoffbetriebenen Einrichtung aufgeladen werden. Beim Betreiben der Anlage wird somit die Hochvolt-Speicherbatterie bei Bedarf mittels Energie der brennstoffbetriebenen Einrichtung zur Erzeugung elektrischer Energie der Netzersatzanlage aufgeladen, insbesondere wenn keine Energie aus dem unter- und übergeordneten Netzwerk zur Verfügung steht.

Die Bereitstellung der Hochvolt-Speicherbatterie erfolgt bevorzugt mit einem Soll-Ladestand, der anhand einer Verbrauchs- und/oder Erzeugungsprognose für das untergeordnete Netzgebiet bestimmt wird.

Die Verbrauchs- und/oder Erzeugungsprognose kann anhand von verschiedenartigen Daten erstellt werden, darunter eine oder mehrere der folgenden:
Angaben zu Verbrauchern und Erzeugern im untergeordneten Netzgebiet (z. B. Anzahl Haushalte, Haushaltsgrössen, gewerbliche Verbraucher, Nennleistungen von Photovoltaik-Anlagen usw.);
- einem vorgegebenen Zeitfenster für den Einsatz der erfindungsgemässen Anlage; und/oder
- historischen Messdaten für den Verbrauch und/oder die Produktionsleistung im untergeordneten Netzgebiet, für einzelne Verbraucher bzw. Erzeuger oder aggregiert für das gesamte Gebiet.

Bei der Festlegung des Soll-Ladestandes können folgende I<riterien herangezogen werden:
- ausreichend hoher Ladestand für die Sicherstellung der benötigten Versorgungsleistung (inkl. erwarteter Schwankungen);
- ausreichend niedriger Ladestand für das Ermöglichen einer Energieaufnahme durch die Hochvolt-Speicherbatterie bei Leistungsspitzen;
- Ladestand in einem vorgegebenen Band zum Schonen der Hochvolt-Speicherbatterie;
- Minimieren der Lärmentwicklung durch den Betrieb der brennstoffbetriebenen Einrichtung zur Erzeugung elektrischer Energie (falls vorhanden), insbesondere in kritischen Zeitfenstern (z. B. nachts).

In Betriebsphasen, in denen sich der Ladestand der Hochvolt-Speicherbatterie grundsätzlich beeinflussen lässt, wenn z. B. die Einrichtung zur Erzeugung elektrischer Energie selektiv ein- oder ausgeschaltet werden kann, ohne dass die Versorgung des untergeordneten Netzgebiets beeinflusst wird, kann der (neue) Soll-Ladestand anhand von aktualisierten Verbrauchs- und/oder Erzeugungsprognosen neu bestimmt werden. Diese Neubestimmung kann kontinuierlich oder in festgelegten Abständen erfolgen.

Mit Vorteil ist die Erzeugungsprognose zumindest teilweise auf eine Wetterprognose gestützt, wobei Erzeugungsvorhersagen für wetterabhängige Erzeuger aus der Wetterprognose abgeleitet werden. Dies ist vor allem dann nützlich, wenn im untergeordneten Netzgebiet witterungsabhängige Erzeuger (z. B. Photovoltaik, Windkraft) vorhanden sind.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein schematisches Blockschaltbild einer erfindungsgemässen Anlage;
- Fig. 2: ein Flussdiagramm eines erfindungsgemässen Verfahrens
- Fig. 3A-D: den Energiefluss in der erfindungsgemässen Anlage in verschiedenen Betriebszuständen; und
- Fig. 4: den prognostizierten Lastgang im untergeordneten Netzgebiet und daraus abgeleitete Steuerinformationen.

Grundsätzlich sind in den Figuren gleiche Teile mit gleichen Bezugszeichen versehen.

### Wege zur Ausführung der Erfindung

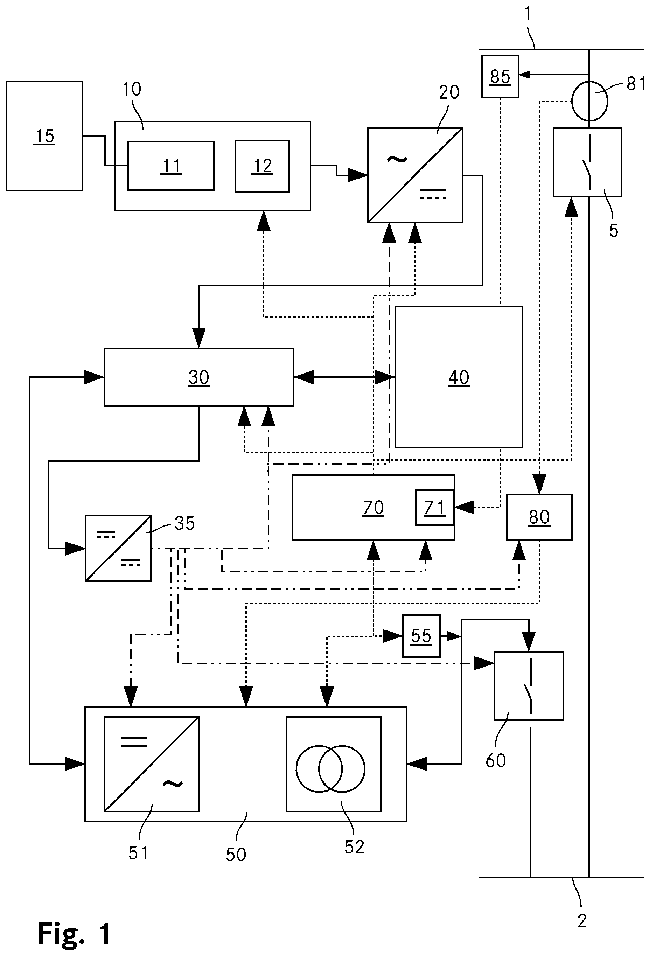

Die Figur 1 ist ein schematisches Blockschaltbild einer erfindungsgemässen Netzersatzanlage. Die Anlage ist mobil und zu diesem Zweck auf einem Fahrzeug montiert. Sie wird mit einem übergeordneten Netzgebiet 1 und einem untergeordneten Netzgebiet 2 verbunden, wobei sich das untergeordnete Netzgebiet 2 mittels eines Trennschalters 5 vom übergeordneten Netzgebiet trennen lässt.

Die Anlage umfasst ein Genset 10 mit einem Dieselmotor 11, der einen Generator 12 betreibt. Der Dieselmotor 11 wird von einem Tank 15 mit Treibstoff versorgt. Im Rahmen der erfindungsgemässen Anlage wird er mit einer den Betriebsverhältnissen angepassten Drehzahl betrieben, so dass eine hohe Effizienz erreichbar ist. Beim Ausführungsbeispiel weist das Genset eine Dauerleistung von 40 kW auf. Vom Generator 12 erzeugter Wechselstrom wird durch den an das Genset 10 angeschlossenen Gleichrichter 20 in Gleichstrom mit einer Spannung von 750 V gewandelt und auf einen Hochvolt-Verteiler 30 geführt.

Mit dem Hochvolt-Verteiler 30 ist u. a. eine Hochvolt-Speicherbatterie 40 verbunden. Diese umfasst zwei Li-lonen-Batteriemodule mit einer Bruttokapazität von jeweils mindestens 25 kWh, sie kann bei Bedarf durch weitere Module erweitert werden. Die Batteriespannung beträgt 750 V. Die Spitzenladeleistung der Hochvolt-Speicherbatterie 40 mit zwei Modulen beträgt 150 kW, die Dauerladeleistung 50 kW. Die Dauerentladeleistung (Bezugsleistung) liegt bei 100 kW, kurzzeitig können bis zu 400 kW bezogen werden. Die Hochvolt-Speicherbatterie 40 umfasst eine Lade-/Entladeelektronik.

Der Hochvolt-Verteiler 30 ist weiter mit einer Aufbereitungseinrichtung 50 verbunden. Diese umfasst ihrerseits einen Inverter 51 sowie einen Transformator 52 und ermöglicht die Wandlung des 750 V-Gleichstroms in dreiphasigen Wechselstrom mit einer Spannung von 400 V. Ihre Nennleistung beträgt 200 kW. Weitere Komponenten wie Schalter und Filter sind ebenfalls Teil der Aufbereitungseinrichtung 50. Über einen Hauptschalter 60 ist der Ausgang der Aufbereitungseinrichtung 50 mit dem untergeordneten Netzgebiet 2 verbunden.

Die Anlage umfasst eine Hauptsteuerung 70, die u. a. den Betrieb des Trennschalters 5, des Gensets 10, des Hochvolt-Verteilers 30 und der Aufbereitungseinrichtung 50 steuert. Die Leitungen für Steuersignale sind in den Figuren punktiert dargestellt. Zudem umfasst die Anlage eine Synchronisationssteuerung 80, die mit einer Messsonde 81 im übergeordneten Netzgebiet, also vor dem Trennschalter 5, verbunden ist und verarbeitete Messsignale an die Aufbereitungseinrichtung 50 weitergibt.

Weiter umfasst die Anlage eine erste PLC-Schnittstelle 85, die zum Empfang von Powerline-Signalen mit dem übergeordneten Netzgebiet 1 verbunden ist. Die Signale werden an eine Eingangsschnittstelle 71 der Hauptsteuerung 70 übermittelt und von dieser mit weiteren über die Eingangsschnittstelle 71 empfangenen Signalen zum Generieren von Steuersignalen verarbeitet. Über eine zweite PLC-Schnittstelle 55 werden die Steuersignale in das untergeordnete Netzgebiet 2 eingekoppelt.

Gespeist werden die Hauptsteuerung 70 und die Synchronisationssteuerung 80 wie auch u. a. der Gleichrichter 20, der Hochvolt-Verteiler 30, die Aufbereitungseinrichtung 50 und der Hauptschalter 60 von einem Konverter 35, der an den Hochvolt-Verteiler 30 angeschlossen ist und für die erwähnten Komponenten eine Betriebsspannung von 24 V DC (Dauerleistung 4'000 W) zur Verfügung stellt. Die Leitungen zur elektrischen Niederspannungsversorgung sind in den Figuren strichpunktiert dargestellt.

Nicht dargestellt in der Figur 1 ist das Thermomanagement. An sich bekannte I<ühl- und Heizeinrichtungen, gesteuert durch die Hauptsteuerung 70, sorgen für die I<ühlung des Genset 10, der Aufbereitungseinrichtung 50 und gegebenenfalls weiterer Komponenten wie des Konverters 35, sowie für die Temperierung (I<ühlung bzw. Heizung) der Hochvolt-Speicherbatterie 40. Letzteres sorgt dafür, dass die Batterie bei unterschiedlichsten Umweltbedingungen, wie sie im mobilen Einsatz auftreten können, im optimalen Temperaturbereich arbeiten kann.

Der Aufbau auf dem Fahrzeug gliedert sich in vier Module:
I. ein Versorgungsmodul mit dem Tank 15 und der Hochvolt-Speicherbatterie 40;
II. ein erstes Energieaufbereitungsmodul mit der Aufbereitungseinrichtung 50;
III. ein zweites Energieaufbereitungsmodul mit dem Genset 10 und dem Gleichrichter 20; und
IV. ein Steuermodul u. a. mit der Hauptsteuerung 70 und einer entsprechenden Benutzerschnittstelle.

Insgesamt ermöglicht das hier beschriebene System eine Versorgung des untergeordneten Netzgebiets 2 mit einer Spitzenleistung von 200 kW (aus der Hochvolt-Speicherbatterie 40 mit nachfolgender Aufbereitung), einer Dauerleistung über 15 min von 100 kW (rein elektrisch) und einer hybriden Dauerleistung über mindestens 30 min von 95 kW. Durch eine entsprechende Anpassung der Hochvolt-Speicherbatterie (z. B. durch die Ergänzung mit weiteren Batteriemodulen) und/oder des Gensets lassen sich die Leistungsdaten an die vorgesehene Anwendung anpassen.

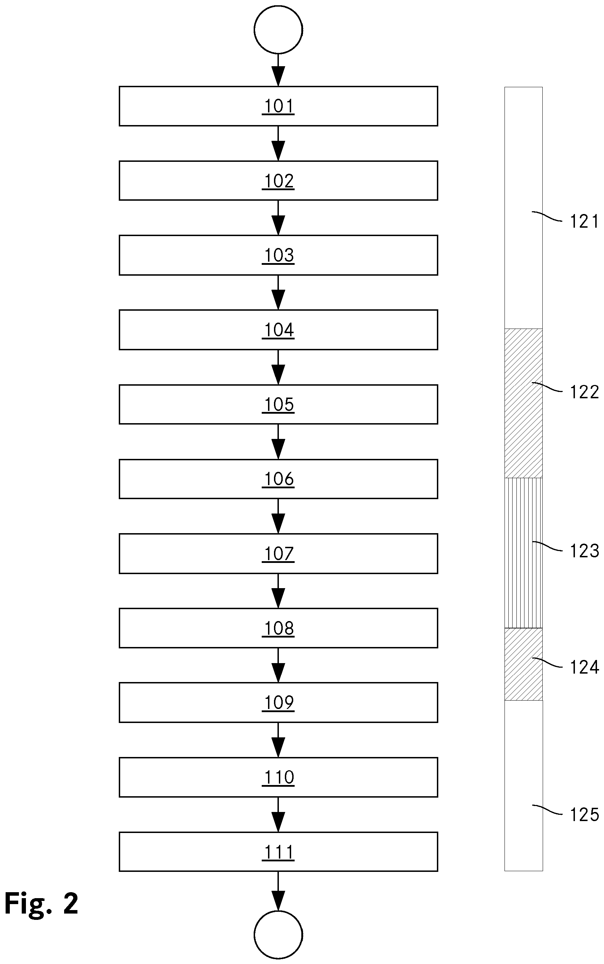

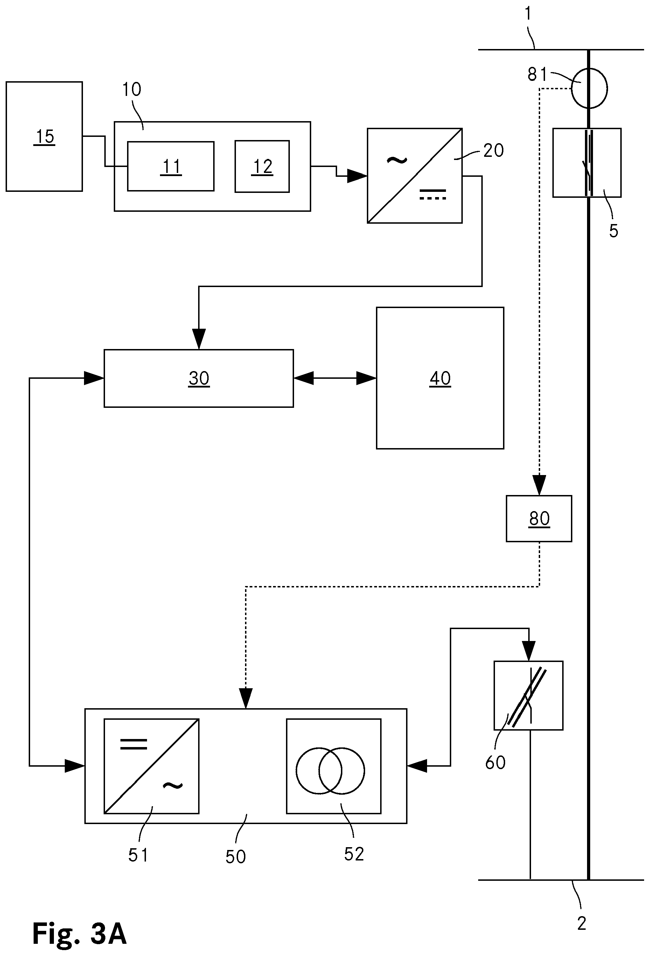

Die Figur 2 ist ein Flussdiagramm eines erfindungsgemässen Verfahrens, die Figuren 3A-D stellen den Energiefluss in der erfindungsgemässen Anlage in verschiedenen Betriebszuständen schematisch dar.

Es wird im Folgenden davon ausgegangen, dass aufgrund geplanter Wartungsarbeiten die Versorgung eines untergeordneten Netzgebiets für einige Stunden durch die erfindungsgemässe Netzersatzanlage übernommen werden soll. Dazu wird zunächst die Anlage am Einsatzort positioniert (Schritt 101), mit dem übergeordneten Netz verbunden (Schritt 102) und mit dem untergeordneten Netz verbunden (Schritt 103). Sie befindet sich bis dahin im ausgeschalteten Betriebszustand 121, der in der Figur 3A dargestellt ist. Das untergeordnete Netzgebiet 2 wird direkt aus dem übergeordneten Netzgebiet 1 versorgt. Der Trennschalter 5 ist geschlossen, der Hauptschalter 60 geöffnet.

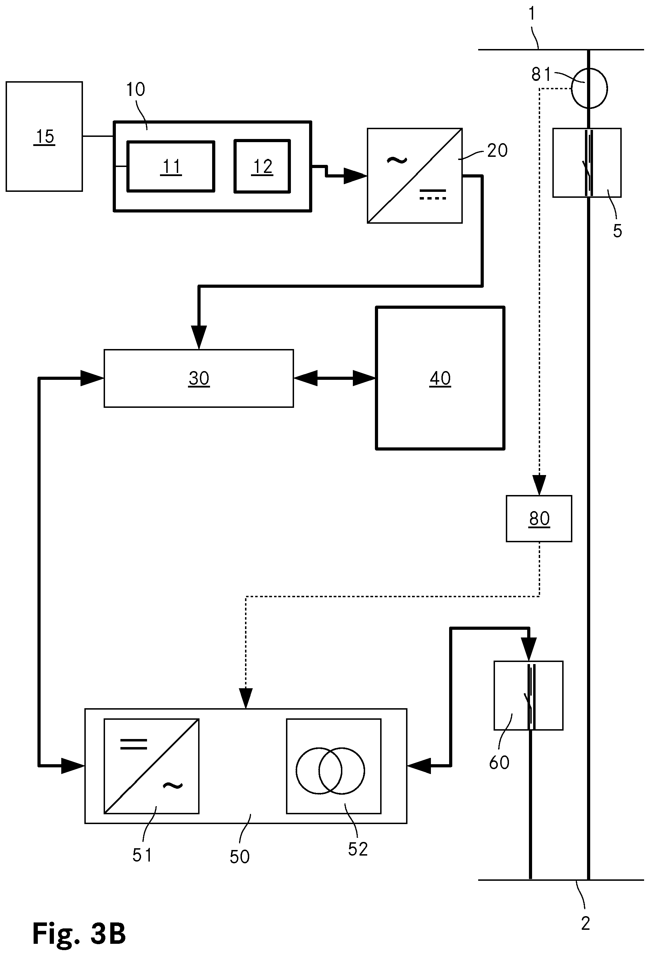

Nun kann die Anlage eingeschaltet werden (Schritt 104). Dabei wird insbesondere auch der Hauptschalter 60 geschlossen und die Anlage geht in den integrierten Betriebszustand 122 (P/G-Betrieb) über, der in der Figur 3B dargestellt ist. Das untergeordnete Netzgebiet 2 wird weiterhin vom übergeordneten Netzgebiet 1 versorgt, die erfindungsgemässe Anlage ist mit den Netzgebieten hinsichtlich Frequenz, Spannung und Phasen synchronisiert und kann ihrerseits Energie in die verbundenen Netzgebiete einspeisen bzw. von diesen beziehen, insbesondere zum gezielten Laden bzw. Entladen der Hochvolt-Speicherbatterie 40. In diesem Betriebszustand ist das Laden der Hochvolt-Speicherbatterie 40 alternativ oder ergänzend auch mit Hilfe des Gensets 10 möglich. Im Hinblick auf den bevorstehenden Inselbetrieb wird nun also die Hochvolt-Speicherbatterie 40 vorkonditioniert (Schritt 105), d. h. auf einen vorgegebenen Ladezustand (State of Charge) geladen bzw. entladen und bestmöglich temperiert.

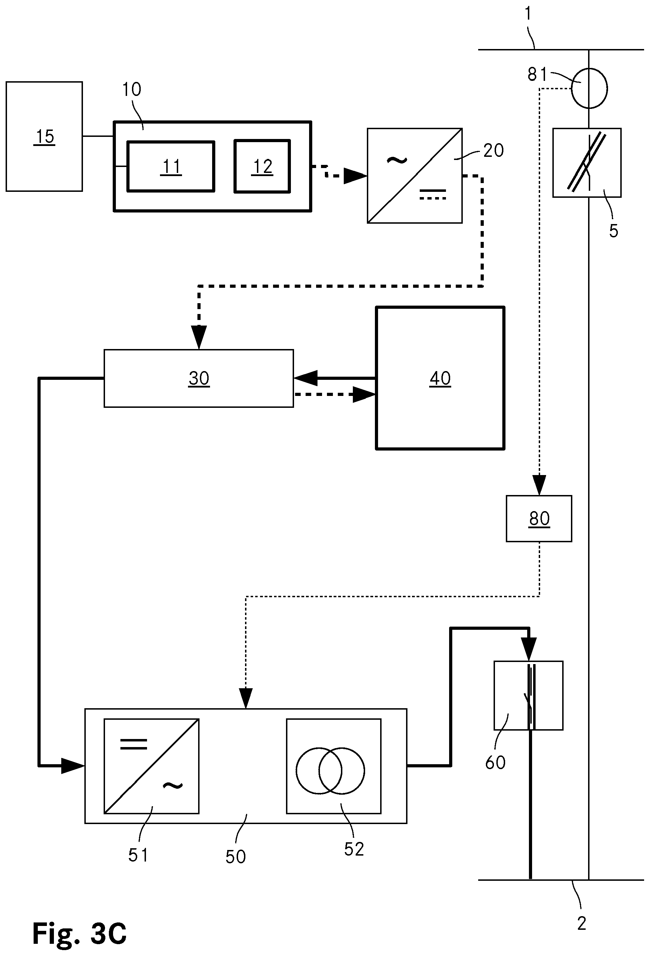

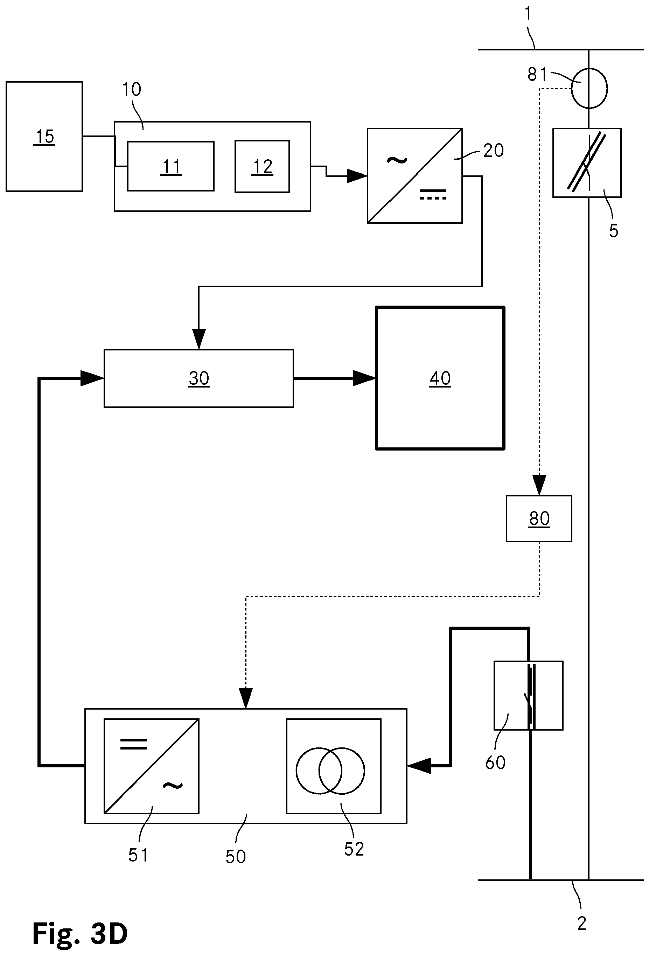

Anschliessend, unmittelbar vor Beginn der Arbeiten am Netz, wird das untergeordnete Netzgebiet 2 zusammen mit der Netzersatzanlage durch Öffnen des Trennschalters 5 vom übergeordneten Netzgebiet 1 getrennt (Schritt 106). Die Anlage geht zum Inselbetrieb (Betriebszustand 123) über. Die Versorgung des untergeordneten Netzgebiets 2 wird vollständig durch die Netzersatzanlage sichergestellt. Bei einem Bedarfsüberschuss wird dieser mit elektrischer Energie aus der Hochvolt-Speicherbatterie 40 gedeckt (vgl. Figur 3C). Dazu wird bedarfsweise das Genset 10 aktiviert, um die Hochvolt-Speicherbatterie nachzuladen. Bei einem Leistungsüberschuss im untergeordneten Netzgebiet, z. B. bei einer hohen PV-Leistung bei gleichzeitig niedrigem Energiebedarf, wird die überschüssige Energie aus dem untergeordneten Netzgebiet 2 in der Hochvolt-Speicherbatterie 40 gespeichert (vgl. Figur 3D).

Für den Fall, dass der momentane Bedarf ausnahmsweise nicht gedeckt werden kann, kann die Anlage Möglichkeiten bereitstellen, um Verbraucher im untergeordneten Netzgebiet 2 auszuschalten, z. B. eine oder mehrere der folgenden:
- Übertragen eines Rundsteuersignals ins untergeordnete Netzgebiet 2;
- Übertragen von Abschaltsignalen (oder Leistungsreduktionssignalen) an entsprechende Empfänger der abzuschaltenden Einrichtungen (z. B. mittels Powerlinesignalen über die PLC-Schnittstelle 55 und/oder über Mobilfunkverbindungen) oder Leitstellen im untergeordneten Netzgebiet 2 (z. B. Einrichtungen der öffentlichen Hand, für die Strassenbeleuchtung o. ä.);
- Reduktion der Netzfrequenz im untergeordneten Gebiet zum Auslösen eines frequenzabhängigen Lastabwurfs.

Für den Fall, dass eine momentane Überproduktion von der Anlage ausnahmsweise nicht abgenommen werden kann, kann die Anlage Möglichkeiten bereitstellen, um Erzeuger im untergeordneten Netzgebiet 2 auszuschalten, z. B. eine oder mehrere der folgenden:
- Übertragen von Abschaltsignalen (oder Leistungsreduktionssignalen) an entsprechende Empfänger der abzuschaltenden Einrichtungen (z. B. mittels Powerlinesignalen über die PLC-Schnittstelle 55 und/oder über Mobilfunkverbindungen);
- Erhöhen der Netzfrequenz im untergeordneten Gebiet zur Reduktion der Produktionsleistung bzw. zum Abschalten von Erzeugern.

Nach Abschluss der Wartungsarbeiten und wenn das übergeordnete Netzgebiet 1 an der jeweiligen Anschlussstelle wieder aktiv ist, wird im Hinblick auf das Wiederverbinden des untergeordneten Netzgebiets 2 mit dem übergeordneten Netzgebiet 1 die Anlage mit dem übergeordneten Netzgebiet 1 resynchronisiert (Schritt 107). Dazu erfasst die Messsonde 81 die Spannung, Frequenz und Phasen im übergeordneten Netzgebiet 1, und die Synchronisationssteuerung 80 gibt die entsprechenden Informationen an die Aufbereitungseinrichtung 50 weiter. Diese passt dann durch entsprechende Steuerung des Inverters 51 die Spannung, Frequenz und Phasen an diejenigen im übergeordneten Netzgebiet 1 an, so dass das übergeordnete Netzgebiet 1 und das untergeordnete Netzgebiet 2 synchron laufen, obwohl sie nicht miteinander verbunden sind.

Sobald diese Synchronizität erreicht ist, können die Netzgebiete wieder miteinander verbunden werden, durch das Schliessen des Trennschalters 5 (Schritt 108). Die Anlage geht dann wieder in den integrierten Betrieb (Betriebszustand 124) über. Sie kann dann ausgeschaltet (Schritt 109, Betriebszustand 125 "aus"), vom übergeordneten Netzgebiet 1 und vom untergeordneten Netzgebiet 2 getrennt (Schritt 110) und schliesslich wieder abtransportiert werden (Schritt 111).

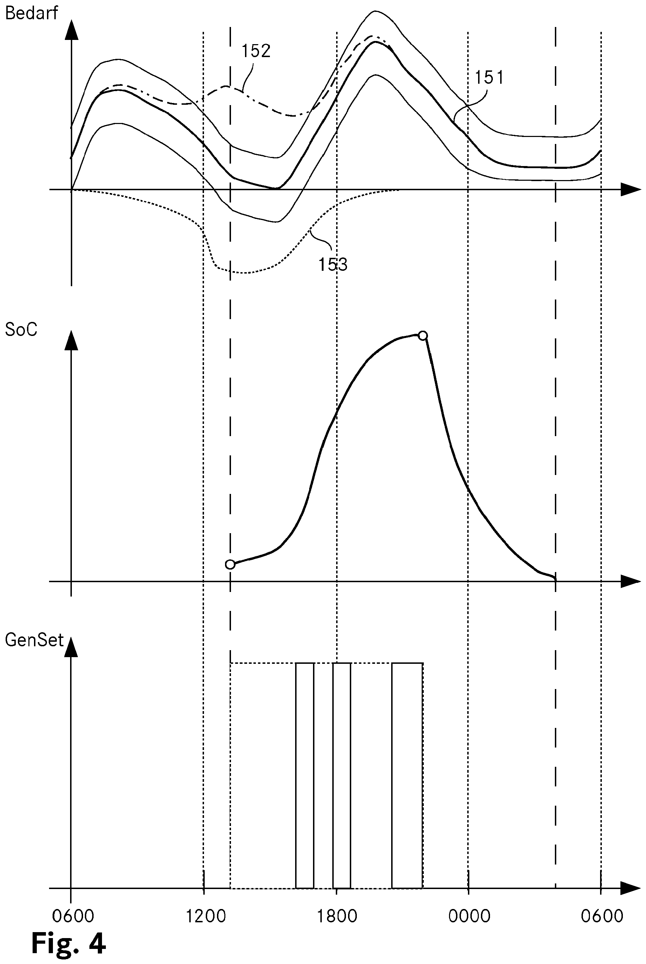

Die Figur 4 zeigt den prognostizierten Lastgang im untergeordneten Netzgebiet und daraus abgeleitete Steuerinformationen, während 24 Stunden, von 6 Uhr bis 6 Uhr des darauffolgenden Tages.

Der Lastgang 151 ergibt sich als Differenz zwischen Energiebedarf 152 und Energieerzeugung 153 im untergeordneten Netzgebiet. Für die Einsatzplanung wird eine gewisse Unsicherheit im Lastgang 151 (dünne durchgezogene Linien) berücksichtigt.

Die Prognose des Energiebedarfs 152 wird aus historischen Informationen generiert, wobei nebst der Struktur des untergeordneten Netzgebiets, der Jahreszeit und dem Wochentag kurzfristige verbrauchsrelevante Faktoren wie die prognostizierte Aussentemperatur mit berücksichtigt werden können. Die historischen Daten können sich spezifisch auf das untergeordnete Netzgebiet beziehen und/oder aus allgemeinen Daten unter Berücksichtigung der lokalen Gegebenheiten errechnet werden.

Die Prognose der Energieerzeugung stützt sich ebenfalls einerseits auf historische Daten ab. Andererseits werden aber Wetter-Prognosedaten herangezogen, um die Leistung der wetterabhängigen Erzeuger, insbesondere PV- und Windkraftanlagen, im untergeordneten Netzgebiet zu prognostizieren. Im dargestellten Beispiel weist das untergeordnete Netzgebiet mehrere PV-Produktionsanlagen auf. Für den Vormittag ist zunächst ein bewölkter Himmel prognostiziert, so dass von einer reduzierten PV-Produktion ausgegangen wird. Ab Mittag ist dann sonniges Wetter vorhergesagt, so dass nachmittags von einer maximalen PV-Produktion ausgegangen wird, wie sie am jeweiligen Tag im Jahr erwartet werden kann.

Aus dem prognostizierten Lastgang 151 werden Sollwerte für die Konditionierung und Steuerung der Anlage abgeleitet. So wird z. B. für 13.00 Uhr, dem Startzeitpunkt des Inselbetriebs, ein relativ niedriger Sollwert für den Ladezustand (SoC) der Hochvolt-Speicherbatterie vorgegeben, so dass mögliche Energieüberschüsse im untergeordneten Netzgebiet aufgefangen werden können. Sollte in diesem Zeitraum ein Bedarfsüberschuss herrschen, kann die Anlage ohne Weiteres im hybriden Betrieb laufen, das Genset wird entsprechend grundsätzlich aktiviert - wobei eine Zuschaltung natürlich nur dann erfolgt, wenn sie für die Versorgung des untergeordneten Netzwerks notwendig ist.

Für 22.00 Uhr ist ein hoher Sollwert für den Ladezustand vorgegeben. Dieser wird durch einen entsprechenden Betrieb des Genset im Zeitfenster zwischen 13.00 Uhr und 22.00 Uhr erreicht und soll dafür sorgen, dass die Nachtversorgung soweit möglich aus der Hochvolt-Speicherbatterie erfolgt. Dadurch werden Lärmemissionen der Anlage minimiert. Eine Aktivierung des Genset im Zeitraum von 22.00 Uhr bis zum geplanten Ende des Inselbetriebs um 04.00 Uhr erfolgt nur, wenn dies zur Versorgung des untergeordneten Netzgebiets zwingend notwendig ist.

Bei längeren Betriebsdauern kann es notwendig sein, den Ladezustand der Hochvolt-Speicherbatterie mehrfach anzuheben und/oder abzusenken. Auch dies wird durch eine entsprechende Steuerung des Betriebs des Gensets erreicht.

Während des Betriebs der Anlage können die Prognosen und daraus abgeleiteten Sollwerte laufend automatisch angepasst werden, z. B. wenn aktualisierte Wetterdaten vorliegen oder wenn beispielsweise Echtzeitinformationen zur Energienutzung und/oder -erzeugung vorliegen. So lassen sich z. B. Verbrauchsprognosen aus Verkehrsdaten generieren, weil ein erhöhtes Verkehrsaufkommen darauf hindeutet, dass - mit einer gewissen zeitlichen Verzögerung - ein erhöhter Energiebedarf für das Aufladen von batterieelektrischen Fahrzeugen zu erwarten ist. Grössere Verbraucher, z. B. Betriebe oder öffentliche Ladestationen, im untergeordneten Netzgebiet können weitere Informationen liefern, die für die Aktualisierung der Betriebsplanung der Anlage herangezogen werden können.

Die Erfindung ist nicht auf das dargestellte Ausführungsbeispiel beschränkt. So können sich die eingesetzten I<omponenten des Systems und ihre Betriebsdaten von denjenigen der beschriebenen Anlage unterscheiden. Dasselbe gilt für ihre spezifische Interaktion. Die Vorkonditionierung der Hochvolt-Speicherbatterie kann bereits vor dem Transport an den Einsatzort, z. B. in einem Depot, stattfinden. In gewissen Fällen, vor allem bei ungeplanten Einsätzen (Notfällen) wird die Stromversorgung im untergeordneten Netzgebiet erst durch das Verbinden und Einschalten der Netzersatzanlage wiederhergestellt, entsprechend ergibt sich ein etwas anderer Verfahrensablauf.

Wie oben ausgeführt, lässt sich eine erfindungsgemässe Anlage auch ohne Genset betreiben. Entsprechend fehlen bei solchen Anlagen der Treibstofftank, das Genset und der nachgeschaltete Gleichrichter oder sie werden modular bereitgestellt und einsatzabhängig mitgeführt und angeschlossen. Wird die Anlage im Rahmen eines Einsatzes ohne Genset betrieben oder ist sie nicht mit einem solchen ausgerüstet, erfolgt im Inselbetrieb die Deckung von Bedarfsüberschüssen stets mit elektrischer Energie aus der Hochvolt-Speicherbatterie. Dies ist bei der Dimensionierung der Batterie, der Bestimmung des Anfangs-Sollwerts des Ladezustands und der Steuerung der Verbraucher im untergeordneten Netzgebiet zu beachten.

Zusammenfassend ist festzustellen, dass die Erfindung eine Anlage zur Stromversorgung eines untergeordneten Netzgebietes schafft, welche einen effizienten und leisen Betrieb ermöglicht.

## Patentansprüche

1. Anlage zur Stromversorgung eines untergeordneten Netzgebietes, umfassend:
a) eine erste Verbindung zu einem übergeordneten Netzgebiet, wobei die erste Verbindung mittels eines Trennschalters selektiv herstellbar und trennbar ist;
b) eine zweite Verbindung zum untergeordneten Netzgebiet;
c) eine Hochvolt-Speicherbatterie mit einer Ladeelektronik;
d) eine erste Aufbereitungseinrichtung mit einem Umrichter, zur Aufbereitung von elektrischer Energie von der Hochvolt-Speicherbatterie;
e) einen Hochvolt-Verteiler, der mit der Hochvolt-Speicherbatterie und der ersten Aufbereitungseinrichtung zum Austausch elektrischer Energie leitungsmässig verbunden ist;
f) eine Synchronisationssteuerung, die mit einer Messsonde im übergeordneten Netzgebiet zum Empfang von Messsignalen gekoppelt ist;
g) eine Steuerung zum Steuern zumindest des Trennschalters, des Hochvolt-Verteilers und der ersten Aufbereitungseinrichtung;
wobei die erste Aufbereitungseinrichtung anhand der von der Messsonde empfangenen Messsignalen derart steuerbar ist, dass ohne Versorgungsunterbruch im untergeordneten Netzgebiet und bei aktivem übergeordneten Netzgebiet von einem Inselbetrieb, in dem die erste Verbindung mittels des Trennschalters getrennt ist, in einen integrierten Betrieb umschaltbar ist, in dem die erste Verbindung hergestellt ist, wobei bei der Umschaltung eine Spannung, eine Frequenz und drei Phasen im untergeordneten Netzgebiet von der ersten Aufbereitungseinrichtung an das übergeordnete Netzgebiet angepasst werden.

2. Anlage nach Anspruch 1, **dadurch gekennzeichnet, dass** im integrierten Betrieb die Hochvolt-Speicherbatterie selektiv mit Energie vom übergeordneten Netzgebiet und mit Energie vom untergeordneten Netzgebiet aufladbar ist.

3. Anlage nach Anspruch 1 oder 2, **dadurch gekennzeichnet, dass** im Inselbetrieb und im integrierten Betrieb von der Hochvolt-Speicherbatterie bedarfsweise Energie zur Stützung des untergeordneten Netzgebiets abgebbar ist.

4. Anlage nach einem der Ansprüche 1 bis 3, **dadurch gekennzeichnet, dass** im integrierten Betrieb von der Hochvolt-Speicherbatterie Energie an das untergeordnete und/oder übergeordnete Netzgebiet abgebbar ist, um einen Ladestand der Hochvolt-Speicherbatterie abzusenken.

5. Anlage nach einem der Ansprüche 1 bis 4, **dadurch gekennzeichnet, dass** zum Umschalten von einem ausgeschalteten Betriebszustand oder vom integrierten Betrieb zum Inselbetrieb eine Spannung, eine Frequenz und drei Phasen der Anlage an das übergeordnete Netzgebiet anpassbar sind, wonach die Verbindung zum übergeordneten Netzgebiet mittels des Trennschalters trennbar ist.

6. Anlage nach einem der Ansprüche 1 bis 5, **gekennzeichnet durch** eine erste Steuereinrichtung zum Steuern von Erzeugern im untergeordneten Netzgebiet, umfassend eine erste Eingangsschnittstelle zum Empfang von ersten Eingangsdaten zur Energieverfügbarkeit, eine erste Ausgangsschnittstelle zur Übermittlung von ersten Steuerdaten an die Erzeuger und erste Verarbeitungsmittel zur Verarbeitung der ersten Eingangsdaten und zum Generieren der ersten Steuerdaten.

7. Anlage nach einem der Ansprüche 1 bis 6, **gekennzeichnet durch** eine zweite Steuereinrichtung zum Steuern von Verbrauchern im untergeordneten Netzgebiet, umfassend eine zweite Eingangsschnittstelle zum Empfang von zweiten Eingangsdaten zur Energieverfügbarkeit, eine zweite Ausgangsschnittstelle zur Übermittlung von Steuerdaten an die Verbraucher und zweite Verarbeitungsmittel zur Verarbeitung der zweiten Eingangsdaten und zum Generieren der zweiten Steuerdaten.

8. Anlage nach Anspruch 6 oder 7, **dadurch gekennzeichnet, dass** die erste und/oder zweite Ausgangsschnittstelle dazu eingerichtet ist, Power-Line-Communication-Signale in das untergeordnete Netzgebiet einzukoppeln.

9. Anlage nach einem der Ansprüche 6 bis 8, **dadurch gekennzeichnet, dass** die erste und/oder zweite Eingangsschnittstelle dazu eingerichtet ist, Echtzeit-Erzeugungs- und/oder Verbrauchsdaten zu empfangen.

10. Anlage nach einem der Ansprüche 1 bis 9, weiter umfassend
h) eine brennstoffbetriebene Einrichtung zur Erzeugung elektrischer Energie und einen lokalen Brennstoffspeicher für die brennstoffbetriebene Einrichtung;
i) eine zweite Aufbereitungseinrichtung zur Aufbereitung der elektrischen Energie der brennstoffbetriebenen Einrichtung;
wobei
- die erste Aufbereitungseinrichtung zur Aufbereitung von elektrischer Energie von der zweiten Aufbereitungseinrichtung ausgebildet ist;
- der Hochvolt-Verteiler mit der zweiten Aufbereitungseinrichtung leitungsmässig verbunden ist; und
- die Steuerung zum Steuern der brennstoffbetriebenen Einrichtung zur Erzeugung elektrischer Energie ausgebildet ist.

11. Anlage nach Anspruch 10, **dadurch gekennzeichnet, dass** im integrierten Betrieb die Hochvolt-Speicherbatterie selektiv mit Energie von der brennstoffbetriebenen Einrichtung aufladbar ist.

12. Anlage nach einem der Ansprüche 1 bis 11, **dadurch gekennzeichnet, dass** sie folgende Module umfasst:
a) ein Versorgungsmodul mit der Hochvolt-Speicherbatterie;
b)
b) ein Steuermodul mit der Steuerung und einer Benutzerschnittstelle für die Steuerung; und
c) ein erstes Energieaufbereitungsmodul mit der ersten Aufbereitungseinrichtung.

13. Anlage nach Anspruch 10 und Anspruch 12, **dadurch gekennzeichnet, dass** sie weiter ein zweites Energieaufbereitungsmodul mit der brennstoffbetriebenen Einrichtung zur Erzeugung elektrischer Energie und der zweiten Aufbereitungseinrichtung umfasst und dass bevorzugt das Versorgungsmodul einen I<raftstofftank umfasst.

14. Anlage nach einem der Ansprüche 1 bis 13, **dadurch gekennzeichnet, dass** sie auf einem Fahrzeug angeordnet ist.

15. Verfahren zur Stromversorgung eines untergeordneten Netzgebietes, umfassend folgende Schritte:
a) Positionieren einer mobilen Netzersatzanlage an einem Einsatzort;
b) Verbinden der Netzersatzanlage mit einem übergeordneten Netzgebiet;
c) Verbinden der Netzersatzanlage mit dem untergeordneten Netzgebiet;
d) Bereitstellen einer Hochvolt-Speicherbatterie der Netzersatzanlage mit einem vorgebbaren Ladestand;
e) gegebenenfalls Trennen einer Verbindung zwischen dem untergeordneten Netzgebiet und dem übergeordneten Netzgebiet;
f) Versorgen des untergeordneten Netzgebiets im Inselbetrieb mit geeignet aufbereiteter Energie der Hochvolt-Speicherbatterie;
g) Empfang von Messsignalen einer Messsonde im übergeordneten Netzgebiet;
h) Anpassen einer Spannung, einer Frequenz und von drei Phasen im untergeordneten Netzgebiet an das übergeordnete Netzgebiet, anhand der empfangenen Messsignale; und
i) Wiederherstellung einer Verbindung zwischen dem übergeordneten Netzgebiet und dem untergeordneten Netzgebiet, nachdem die Anpassung erfolgt ist.

16. Verfahren nach Anspruch 15, **dadurch gekennzeichnet, dass** bei Bedarf die Hochvolt-Speicherbatterie mittels Energie einer brennstoffbetriebenen Einrichtung zur Erzeugung elektrischer Energie der Netzersatzanlage aufgeladen wird.

17. Verfahren nach Anspruch 16, **dadurch gekennzeichnet, dass** die brennstoffbetriebene Einrichtung zur Erzeugung elektrischer Energie ein Genset ist, wobei dessen Antriebsmotor mit einer konstanten Drehzahl betrieben wird.

18. Verfahren nach einem der Ansprüche 15 bis 17, **dadurch gekennzeichnet, dass** die Bereitstellung der Hochvolt-Speicherbatterie mit einem Soll-Ladestand erfolgt, der anhand einer Verbrauchs- und/oder Erzeugungsprognose für das untergeordnete Netzgebiet bestimmt wird.

19. Verfahren nach Anspruch 18, **dadurch gekennzeichnet, dass** die Erzeugungsprognose zumindest teilweise auf eine Wetterprognose gestützt ist, wobei Erzeugungsvorhersagen für wetterabhängige Erzeuger aus der Wetterprognose abgeleitet werden.
